(19) Europäisches Patentamt
European Patent Office
Office européen des brevets

(11) **EP 1 954 003 B1**

(12) **EUROPEAN PATENT SPECIFICATION**

(45) Date of publication and mention
of the grant of the patent:
**10.02.2010 Bulletin 2010/06**

(51) Int Cl.:
*H04L 29/08* (2006.01)

(21) Application number: **07001985.6**

(22) Date of filing: **30.01.2007**

(54) **Forward feedback protocol**

Protokoll zur Vorwärtsregelung

Protocole d'avance de rétroaction

(84) Designated Contracting States:
**DE GB**

(43) Date of publication of application:
**06.08.2008 Bulletin 2008/32**

(73) Proprietor: **NTT DoCoMo, Inc.**
**Chiyoda-ku**
**Tokyo 100-6150 (JP)**

(72) Inventors:
• **Despotovic, Zoran, Dr.**
**80469 München (DE)**
• **Kellerer, Wolfgang, Dr.**
**82256 Fürstenfeldbruck (DE)**
• **Aberer, Karl**
**1028 Preverenges (CH)**
• **Galuba, Wojciech**
**1007 Lausanne (CH)**

(74) Representative: **Schenk, Markus et al**
**Schoppe, Zimmermann, Stöckeler & Zinkler**
**Patentanwälte**
**Postfach 246**
**82043 Pullach bei München (DE)**

(56) References cited:
**WO-A-2005/114959**

• **HU, TIM HSIN-TING, SENEVIRATNE, ARUNA:
"Autonomic Peer-to-Peer Service Directory"
IEICE TRANSACTIONS ON INFORMATION AND
SYSTEMS 2005, [Online] vol. E88-D, December
2005 (2005-12), pages 2630-2639, XP002439008
Retrieved from the Internet: URL:http://
ietisy.oxfordjournals.org/cgi/r eprint/E88-D/
12/2630.pdf> [retrieved on 2007-06-21]**
• **MEKOUAR ET AL: "Peer-to-peer's most wanted:
Malicious peers" COMPUTER NETWORKS,
ELSEVIER SCIENCE PUBLISHERS B.V.,
AMSTERDAM, NL, vol. 50, no. 4, 15 March 2006
(2006-03-15), pages 545-562, XP005224219 ISSN:
1389-1286**
• **REFAEI M T ET AL: "A Reputation-based
Mechanism for Isolating Selfish Nodes in Ad Hoc
Networks" MOBILE AND UBIQUITOUS
SYSTEMS: NETWORKING AND SERVICES, 2005.
MOBIQUITOUS 2005. THE SECOND ANNUAL
INTERNATIONAL CONFERENCE ON SAN DIEGO,
CA, USA 17-21 JULY 2005, PISCATAWAY, NJ,
USA,IEEE, 17 July 2005 (2005-07-17), pages 3-11,
XP010853979 ISBN: 0-7695-2375-7**
• **ABERER, KARL ; DATTA, ANWITAMAN ;
HAUSWIRTH, MANFRED ; SCHMIDT, ROMAN:
"Das P-Grid-Overlay-Netzwerk: Von einem
einfachen Prinzip zu einem komplexen System"
DATENBANK SPEKTRUM, [Online] vol. Heft, no.
13, 2005, pages 1-14, XP002439009 Retrieved
from the Internet: URL:http://infoscience.epfl.ch/
getfile.py?
docid=7562&name=Aberer05PGrid&format=pdf
&v ersion=1> [retrieved on 2007-06-21]**

**Description**

The present invention relates to the field of peer-to-peer overlay systems, and in particular to forward feedback mechanisms in peer-to-peer systems, in order to overcome malicious network nodes.

Peer-to-Peer (P2P) networks are self-organizing, distributed overlay networks enabling a fast location of a set of resources. They are realized as application layer overlay networks relying on whatever physical connectivity among the participating nodes. The basic problem addressed by a P2P network is the self-organized distribution of a set of resources among a set of peers enabling their subsequent fast lookup.

A promising approach to solve this problem is the concept of structured P2P networks, also known as Distributed Hash Tables (DHT = Distributed Hash Table). In a DHT peers collaboratively manage specific subsets of resources identified by keys from a key space, where each peer is associated with a key taken from the key space. Given the set of peers, the key of each peer is associated with a partition of the key space such that the peer becomes responsible to manage all resources identified by keys from the associated partition. Typically the key partition consists of all keys closest to the peer key in a suitable metric. The closeness of keys is measured by a distance function. To forward resource requests, peers form a routing network by taking into account the knowledge on the association of peers with key partitions.

Peers typically maintain short-range links to all peers with neighboring keys and in addition a small number of long-range links to some selected distant peers. Using a routing network established in this way, peers forward resource requests in a directed manner to other peers from their routing tables trying to greedily reduce the distance to the key being looked up. Most of DHTs achieve by virtue of this construction and routing algorithms lookup with a number of messages logarithmic in the size of network by using routing tables which are also logarithmic in the size of the network.

Normally the keys are assigned to the peers by hashing a peer's IP (IP = Internet Protocol) address and a randomly chosen string into a hash value. A side goal of using a hash function to map resource keys to peers is balancing the load distribution, when each peer should be responsible for approximately the same number of keys.

Summing up, the specific designs of DHTs depend on the choice of key space, distance function, key partitioning, and linking strategy. However, the good properties related to the efficiency of routing do not come for free. For constructing and maintaining a DHT peers have to deal in particular with the problem of node joins and failures. Since the freedom to choose neighbors in a structured P2P network is constrained, maintenance algorithms are required to reestablish the consistency of routing tables in the presence of network dynamics. Depending on the type of guarantees given by the network different deterministic and probabilistic maintenance strategies have been developed. Maintenance actions can be triggered by various events, such as periodical node joins and leaves or routing failures due to inconsistent routing tables. The different maintenance strategies trade-off maintenance cost versus degree of consistency and thus failure resilience of the network.

In the peer-to-peer architecture the peers provide various services to one another. Services include forwarding a message to some destination, storing a key-value pair in a distributed hash table or downloading a file. Providing a service consumes the resources of the provider, however the provider may gain by becoming the recipient of a service from some other provider. This mutual exchange of services requires the cooperation among the peers. In a typical peer-to-peer network deployment each peer is owned by a different user. The users have full control over the communication protocols followed by the peer. In particular the users may selfishly modify the peer software to only request and receive services from other peers and never provide any services themselves. Independently of the user actions, a peer may also undergo an internal failure leading to a change in the communication protocol that it should normally follow. Regardless of whether the failure is caused by the user or not, the peer can arbitrarily deviate from its expected behavior.

This is commonly termed as the Byzantine failure as defined by Lamport, Shostak, and Pease, "The byzantine general problem, Advances in Ultra-Dependable Distributed Systems", N. Suri, C. J. Walter, and M. M. Hugue (Eds.), IEEE Computer Society Press, 1995., a type of failure that subsumes all other types of failures. From the point of view of the service recipient only a subset of these failures is significant, namely the failures that lead to service not being provided or being provided in a manner that is not satisfactory to the service recipient.

A number of approaches to building cooperation in peer-to-peer networks rely on the universal authentication of the peers, i.e. the ability to reliably verify the identity of any peer in the network. For example in reputation-based approaches each peer has reputation associated with it. Reputation is computed based on the previous history of service provisioning by some provider P. To compute the reputation of P, peers need to exchange information about past interactions with P. Two different peers requesting a service from P need to be certain that both of them indeed interacted with the same provider P before exchanging any information about P. Clearly, reputation requires the universal or global peer authentication.

In reputation-based models trust towards a given node A is determined based on the past actions of A. Every node $V_i$ only has information about the actions of A that $V_i$ itself experienced. To compute the reputation of A, nodes need to exchange the information about the actions of A that they have observed. This exchange and the subsequent computation of reputation can proceed in many ways. There are four classes of approaches, cf. Zoran Despotovic, "Building Trust-Aware P2P Systems, From Trust and Reputation Management to Decentralized e-Commerce Applications" Diploma thesis, EPFL, Swiss Federal Institute of Technology, Lausanne, which are social networks, probabilistic estimation, game-theoretic models and evolutionary approaches.

The social network approach assumes an existence of a digraph of social links between nodes. The interactions between the nodes proceed along the links and each link has a trust value associated with it. That value is updated based on the interactions between the nodes at the two ends of the link. A node V can compute the trust value for another non-neighbor node W by aggregating trust values from other nodes in the following way:

1. enumerate (all) paths from W to V
2. aggregate trust values along the paths
3. merge the results of aggregation at V as the final trust value

The social network approaches vary in the details of the three above steps, e.g. what domain is used to represent trust, what the selected paths are, what are the aggregation and merging functions. Trust values are either computed on demand between specific W and V or simultaneously for all nodes using some form of iterative methods that converge on an Eigenstate of trust values.

The computations in social networks produce trust values that are hard to interpret. In particular, given a trust value for the node A it is hard to translate that value into the probability that A will cooperate. However, this can be rectified if the assumption about probabilistic behavior of the nodes is made explicit and then well known probabilistic estimation techniques such as Bayesian estimation and maximum likelihood estimation are used to compute the trust of a given peer. This is what probabilistic estimation methods do. As an example, consider a network consisting of peers having associated innate probabilities of performing trustworthy. Denote by $\theta_j$ the probability of peer j. Assume that peer j interacted with n other peers $p_1, ..., p_n$ and its performances in these interactions were $x_1, ..., x_n$, where $x_i \in \{0, 1\}$, with "1" denoting honest performance and "0" denoting dishonest performance. When asked to report on peer j's performances witnesses $p_1, p_2, ..., p_n$ may lie and misreport. Assuming that they lie with specific probabilities, say $l_k$ for peer $p_k$, the probability of observing report $y_k$ from peer $p_k$ can be calculated as:

$$P[Y_k = y_k] = \begin{cases} l_k(1 - \theta_j) + (1 - l_k)\theta_j & \text{if } y_k = 1 \\ l_k\theta_j + (1 - l_k)(1 - \theta_j) & \text{if } y_k = 0 \end{cases}$$

By definition, the likelihood function associated with a random sample of reports $y_1, y_2, ..., y_n$ is:

$$L(\theta_j) = P[Y_1 = y_1] P[Y_2 = y_2] \cdot \cdot \cdot P[Y_n = y_n].$$

After collecting the reports on the peer it is about to interact with, the trust computing peer just has to make this product and find $\theta_j$ that maximizes it. This number is the maximum likelihood estimate of the unknown probability.

To do this, the computing peer must have good estimates of the parameters $l_1, ..., l_n$. They can be made by comparing own performances with reports on them. Note also that the own experiences are seamlessly integrated into this model, the trust computing source peer i just has to put $p_i = 1$ for its own experiences $x_i$. As an advantage of the probabilistic methods, it is emphasized that, when compared to social networks, they bring a substantial reduction of the communication overhead. The reason is that they deal only with feedback on the target peer, while social networks essentially aggregate all available feedback, i.e. opinions of all peers about all other peers.

In game theoretic approaches to reputation systems it is often assumed that the players are perfectly rational in the sense that they are only interested in maximizing their own payoffs. These assumptions allow the computation of Nash equilibriums as strategy profiles where peers have no incentive to deviate. Normally, game theoretic modeling of reputation effects requires repeated interaction and uncertainties among the players with respect to their opponents' payoffs, cf. David M. Kreps and Robert Wilson, "Reputation and imperfect information", Journal of Economic Theory, 27:253-279, 1982.

More recently, there have been attempts to extend these models in order to more closely model real world settings. Most notably, the two important models are private and public monitoring games. In these games players do not observe each other's actions but only their signals. In private monitoring games, cf. Michihiro Kandori and Hitoshi Matsushima, "Private observation, communication and collusion", Econometrica, 66(3):627-652, May 1998, the signals are different for different players, while in public monitoring games, cf. George J. Mailath and Stephen Morris, "Repeated games with almostpublic monitoring", CARESS Working Papres almost-pub, University of Pennsylvania Center for Analytic Research and Economics in the Social Sciences, August 1999, all peers observe the same signals about the actions of other peers.

However, a number of problems with respect to the application of game theoretic reputation models can be seen. There are plenty of settings where the full rationality of the players cannot be expected. Any setting with human players would be an example. A second problem is the difficulty of introducing the rationality assumption into the reputation mechanism implementation itself.

Game theorists have also approached the problem of cooperation in a population of PD-players (PD = prisoner's dilemma) from a more experimental angle. Most notably, Robert M. Axelrod, "The Evolution of Cooperation", Basic Books, 1984, has demonstrated the success of the tit-for-tat strategy in an Evolutionary Prisoner's Dilemma setting. In this setting pairs of players are involved in repeated PD games. Each player maintains a score, which is updated after every game round according to the PD payoff matrix. The players with the highest score are considered most fit and their strategies are replicated replacing other unfit strategies. The winning tit-for-tat strategy follows three simple rules:

1. initially cooperate - when interacting with an opponent for the first time, always cooperate
2. punish - if the opponent defected in the previous round, punish him by defecting
3. forgive - if the opponent cooperated in the previous round, cooperate even if there is a history of opponent's defection

The tit-for-tat strategy has been shown to be evolutionary stable, being able to drive into extinction small populations of invading defectors that try to exploit cooperators. At the same time groups of tit-for-taters are always cooperating with each other, which allows them to accumulate score surplus, which in turn can be used to fight against transient groups of defectors.

Hu et al. "Autonomic Peer-to-Peer Service discovery, IEICE 2005, vol. E88-D, 12/2005, XP 00 243 9008 discloses another feedback provision mechanism.

It is the objective of the present invention to provide a network peer and a method for providing a more reliable communication in a peer-to-peer network.

The objective is achieved by a network peer according to claim 1, the method for communicating according to claim 15 and the computer program according to claim 16.

The objective is achieved by a network peer having a first service ID (ID = Identification) associated therewith, comprising a means for, upon receipt of a first service request message having a first unique request ID and requesting a service with a second ID being different from the first service ID, forwarding the first service request message on to another network peer. The network peer further comprises a means for, upon receipt of a feedback message having the first unique request ID, forwarding same on to the other network peer, where the feedback message comprises an indication whether the service with the second service ID has been successfully provided or not. Moreover, the network peer comprises a means for, upon receipt of a second service request message having a second unique request ID and requesting a service with the second service ID, forwarding same on to a network peer selected, based on the indication.

The objective is further achieved by a method for communicating a peer-to-peer network based on a first service ID, comprising the step of forwarding the first service request message on to a network peer upon receipt of the first service message having a first unique request ID and requesting a service with a second service ID being different from the first service ID. The method further comprises a step of forwarding a feedback message having a first unique ID upon receipt of the feedback message to the network peer, where the feedback message comprises an indication whether the service with the second service ID has been provided successfully or not. The method further comprises the step of forwarding a second service request message having a second unique request ID and requesting a service with the second service ID on to a network peer selected based on the indication.

The present invention is based on the finding that a problem of cooperation in peer-to-peer networks can be resolved by utilizing a protocol that can be layered on top of existing hop-by-hop service location functionalities. Single feedback messages can be exchanged among peers of the network and based on the feedback each peer locally and independently learns how to avoid failures, i.e. is enabled to determine malfunctioning nodes. The inventive method provides the advantage that there is no public sharing of information for example through distributed hash tables. Furthermore, the learning processes in the network collectively maximizes cooperation and reduces service provisioning failures. Therefore, embodiments of the present invention are of benefit of many peer-to-peer applications, particularly those in which users or peers find it profitable to misbehave. Embodiments of the present invention therefore bring a more reliable and thus, less costly system operation. They enhance peer-to-peer systems to overcome threats introduced by the peer or user autonomy. Embodiments of the present invention therefore have a beneficial economical impact on the system as a whole.

A peer-to-peer-based distributed implementation of peer authentication itself requires the cooperation of the

EP 1 954 003 B1

peers, which is a problem of conventional approaches. For the inventive approach only a minimal requirement on the peer identities is placed, namely the identities of a pair of peers that have established a communication link are guaranteed not to change during the lifetime of that communication link. In other words both peers that are communicating over the link need the guarantee that the identity of the peer at the other end of the link has not changed over the course of the communication. This can be simply achieved by the use of some well known solutions such as SSL (Secure Sockets Layer).

Embodiments of the present invention provide a mechanism that optimizes, in one preferred embodiment minimizes, the unsatisfactory or failed service provisioning in a peer-to-peer network. Before a service can be provided, a peer that provides the service needs to be located. The service location functionality is typically implemented in a distributed manner in a peer-to-peer network, and it therefore requires cooperation among the peers. Embodiments of the present invention make use of a generic service location algorithm in which the service request originates at the requesting peer and is routed hop-by-hop to a service provider that is capable of providing the requested service. Embodiments of the present invention do not specify how the service request should be routed, which is left to an application or state of the art routing mechanisms. However, a failure in a service location may lead to the wrong service being provided or no service being provided at all. Embodiments of the present invention reduce the number of service location failures by constructing a feedback protocol over the existing underlying service location protocol, which can be any prior art service location protocol.

Apart from eliminating the need for global identities embodiments of the present invention also obviate the need for feedback incentives that are typically required in order to enable cooperation in other approaches, cf. Radu Jurca and Boi Faltings, Towards incentive-compatible reputation management, Trust, Reputation and Security: Theories and Practice (L. Korba R. Falcone, S. Barber and M. Singh, eds.), vol. Lecture Notes in AI 2631, Springer-Verlag, Berlin Heidelberg, 2003, pp. 138-147. In one embodiment of the present invention feedback is obligatory, the peers of network nodes that systematically withhold feedback messages are considered faulty and service requests coming from them are dropped.

In most of the conventional approaches a peer that is detected as faulty is isolated from the network, i.e. no messages are sent to it and messages received from it are dropped. Embodiments of the present invention provide the advantage that network peers learn the nature of the failures and optimize the use of the faulty peers functionality which is still correct. Therefore, in one embodiment of the present invention a misbehaving network node or peer is still included in a network cooperation as far as its still correct functionalities are considered. This leads to a higher level of cooperation than in existing approaches. Embodiments of the present invention therefore provide the advantage that the inventive cooperation algorithm integrates into the existing hop-by-hop service location protocol. The inventive protocol or communication method is built from scratch, fully specifying all the messages that are sent and received without delegating any functionality to other layers such as a DHT or authentication infrastructure.

Furthermore, embodiments of the present invention do not need feedback incentives, as feedback is obligatory and feedback withholding is treated as another failure. Furthermore, embodiments of the present invention provide the advantage that partially faulty peers are not completely isolated from the network, while the usage of their still correct functionality is optimized, in one preferred embodiment it is maximized. With respect to implementation, embodiments of the present invention are simple and lightweight, inventive peers do not have to exchange any information about their observations or states and only single feedback messages are exchanged.

Preferred embodiments of the present invention are described in detail in the following using the accompanying figures, in which

Fig. 1a        shows an embodiment of a network peer;

Fig. 1b        shows an embodiment of the inventive method interacting with existing protocols;

Fig. 2        shows an example scenario within a peer-to-peer network illustrating an embodiment of the inventive communication method;

Figs. 3a-3i    illustrate simulation results investigating embodiments of the present invention.

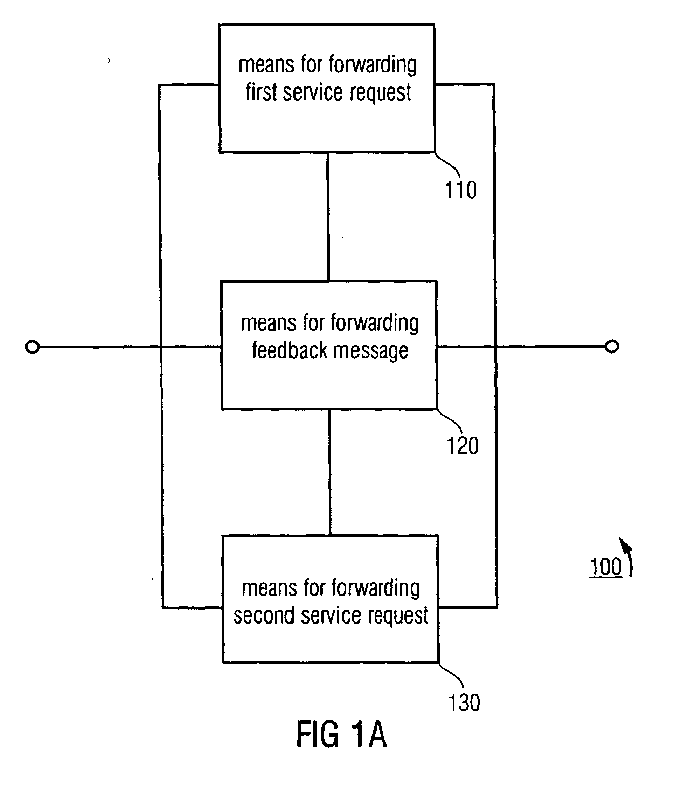

Fig. 1a shows an embodiment of an inventive network peer 100. The network peer 100 having a first service ID associated thereto. The network peer 100 comprises a means 110 for, upon receipt of a first service request message having a first unique request ID and requesting a service with a second service ID being different from the first service ID, forwarding the first service request message on to another network peer. The network peer 100 further comprises a means 120 for, upon receipt of a feedback message having the first unique request ID, forwarding same on to the other network peer, wherein the feedback message comprises an indication whether the service with the second service ID has been provided successfully or not. The network peer 100 further comprises a means 130 for, upon receipt of a

5

further service request message having a second unique request ID and requesting a service with the second service ID, forwarding same on to a network peer selected based on the indication.

In one embodiment the network peer 100 further comprises a means for composing a service request message having a unique request ID and requesting a service with a service ID. The network peer 110 can further comprise a means for composing a feedback message having a unique ID associated with the service request message. In yet another embodiment, the network peer 100 comprises a means for, upon receipt of a different service request message having a different unique request ID and requesting a service with the first service ID, providing a service with the first service ID. In embodiments the means for composing the service request message is further adapted for starting an expiration timer and the means for composing the feedback message can be adapted for upon expiration of said expiration timer before the service with the service ID was provided, composing a negative feedback message having a negative indication and for, upon reception of the service with the service ID before the expiration of said expiration time, for composing a positive feedback message having a positive indication.

In other embodiments, the means for forwarding the first service request can be adapted for starting a second expiration timer, when forwarding the first service request message and the means for forwarding the second service request message can be adapted for assuming the service with the second service ID being not provided if the feedback message having the first unique address ID is not received before expiration of said second expiration timer.

Moreover, the means for composing the feedback message can be further adapted for including a single bit indicating whether the feedback message is positive or negative into the feedback message. The feedback message would then comprise a unique request ID and an indication bit.

In other embodiments the means for forwarding the first or second service request messages can be further adapted for including information on itself, the first or second unique request ID, a network peer the first or second service request was received from, an origin of the first or second service request, or a target network peer in the forwarded first or second service request message. The means for forwarding the second service request message can be adapted for selecting the network peer from a table comprising failure predictions, which are based on the indications in embodiments of the present invention. Furthermore, the failure predictions can be based on probabilistic concepts learning. In one embodiment, the failure predictions can refer to one of or a combination of a previous network peer a message was transmitted or forwarded from, a next network peer a message could be transmitted or forwarded to, or a service ID.

The means for forwarding the feedback message with the first unique ID can be adapted for forwarding the feedback message to the same network peer, the first service request message with the first unique ID was forwarded to. Therewith in one embodiment of the present invention, a network peer would first forward a service request to one of its neighbor peers, and then when the forward feedback is received, the feedback message is forwarded to very same neighbor peer. This enables maintaining failure prediction tables all along the way of service requests. Embodiments of the present invention may further comprise a means for maintaining routing tables and for providing service location information. The means for maintaining routing tables may also maintain distributed hash tables.

Embodiments of the present invention solve the problem of cooperation in peer-to-peer networks. The inventive method can be layered on top of any existing recursive hop-by-hop service location functionality. By utilizing the inventive single bit feedback messages and exchanging them among the peers of the network, each node locally and independently learns to avoid failures based on the feedback. No public sharing of information, as for example through a distributed hash table is necessary. Embodiments of the present invention collectively optimize or maximize cooperation, while reducing or minimizing service provisioning failures.

Embodiments of the present invention therefore do not rely on the existence of a system wide authentication or any type of incentive system to stabilize the cooperation. Embodiments of the present invention make feedback obligatory and therefore withholding feedback is considered as failure. Moreover, instead of completely isolating a partially faulty node from the network as in other solutions, the network learns to use the still correct functionality of a partially faulty node to optimize cooperation.

The resulting inventive protocol or method for communication is very robust in failure scenarios and furthermore has the advantage that it can be extended in a number of ways as well as customized to solve specific cooperation problems occurring in peer-to-peer applications.

Embodiments of the present invention therefore provide the advantage that the cooperation method or algorithm integrates into the existing hop-by-hop service location protocols that are known from prior art. Embodiments of the present invention therefore provide a protocol extension which is built from scratch, fully specifying all the messages that are sent and received without delegating any functionality to other layers such as a DHT or authentication infrastructure. Embodiments further provide the advantage that there is no need for feedback incentives as feedback is obligatory and feedback withholding is treated as a failure.

Moreover, partially faulty peers are not completely isolated from the network with embodiments of the present invention, since the usage of their still correct functionality is optimized, in one preferred embodiment even maximized. The inventive communication method is simple and lightweight, inventive network peers do not need to exchange any information about the observations or state and, furthermore, only single bit feedback messages are exchanged.

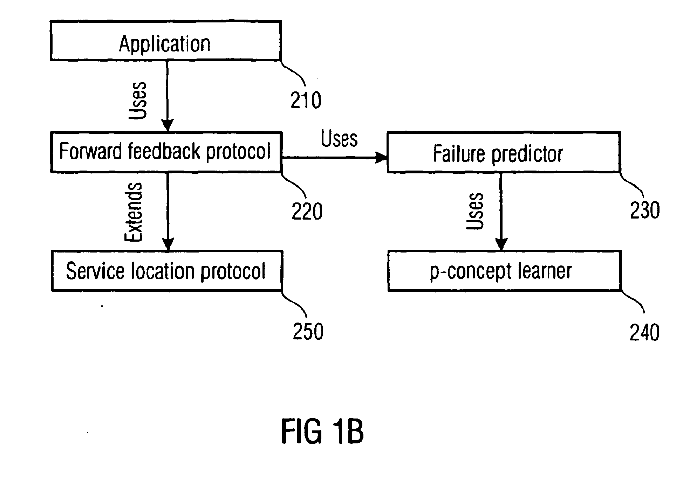

In the following a detailed embodiment of the present invention will be described. Fig. 1b illustrates how an embodiment of the present invention can be integrated into existing systems. Fig. 1b shows an application 210, a forward feedback protocol 220, a failure predictor 230, a p-concept learner 240 and a service location protocol 250. Fig. 1b depicts the separation of a system into different functions or modules and the dependencies between them. As already mentioned above, the service location protocol 250 can be taken from prior art, it locates the appropriate services in a hop-by-hop manner. The inventive forward feedback protocol 220 augments the prior art service location protocol 250 with feedback messages about the success or failure of a service provisioning. These successes and failures along with any deviations from the protocol are reported to the failure predictor 230. The failure predictor 230 is used when routing service requests to avoid forwarding a service request to a next hop or neighbor peer that is likely to lead to a failure in providing a service. The failure predictor 230 uses the p-concepts learning 240 algorithm to make its predictions, cf. Kearns and Schapire, "Efficient distribution-free learning of probabilistic concepts, Computational Learning Theory and Natural Learning Systems, Volume I: Constraints and Prospect", edited by Stephen Jose Hanson, George A. Drastal, and Ronald L. Rivest, Bradford/MIT Press, vol. 1, 1994.

In Fig. 1b, the application 210 can be any arbitrary application as for example a file search or download. The service location protocol 250 provides a service location functionality, which routes service requests in a hop-by-hop manner from a service requestor to a service provider that offers a service specified in a service request or service request message. Services are specified in the service request by means of a service descriptor or service ID. A single service descriptor or service ID can be matched against not only one but many different services.

Let the digraph $G = (V,E)$ be the network of connections between the peers, where $V$ is the set of peers and $E$ is the set of peer pairs representing unidirectional connections. Let $outneigh : V \rightarrow 2^V$ and $inneigh : V \rightarrow 2V$ be the set of peers pointed by outlinks and correspondingly inlinks of $V$. Let $S$ be the set of services and $offeredServices : V \rightarrow 2^S$ be the set of services offered by a given peer $v$.

The set of service descriptors is $D$ and $matchedServices : D \rightarrow 2^S$ returns the set of services that the specified service descriptor matches. The service location functionality is represented as a single function $selectNextHop : S \times V \times 2^V \rightarrow V$ that takes the service descriptor of the service that needs to be located, the current node and the set of possible next hops and returns the chosen next hop.

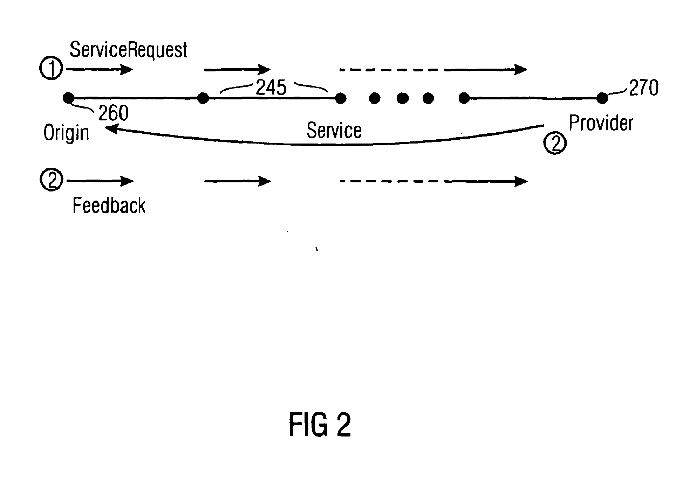

The forward feedback protocol 220 adds on to the existing hop-by-hop protocol for routing the service request. Every node on the routing path from the service request to the service provider expects to receive feedback messages from its previous hop on the path. The feedback message describes whether the service was provided successfully or not. The first feedback message is sent by the service requestor after it received service. Then on, the service feedback message is forwarded following exactly the same path as the service request has followed until the service provider is reached. This process is illustrated in Fig. 2 and in the following outline a detailed algorithm will be provided.

Fig. 2 shows an origin 260, which acts as a service requestor by issuing a service request message in a first step. The service request message is then routed through the peer-to-peer network involving several intermediate peers or hops 265 to a service provider 270. In a second step, the service provider 270 then provides the service to the service requestor or origin 260. Once the origin or service requestor 260 has received the service, respectively if after a certain timer has expired the service has not been received successfully, the origin 260 issues a feedback message in a third step. The feedback message is then provided to the provider 270 traveling through the peer-to-peer network involving exactly the same intermediate peers or hops 265 as the service request message did.

From the point of view of the service requestor, when the application calls requestService for some service descriptor, the peer generates the ServiceRequest message and sends it to the appropriate next hop. It then expects a serviceProvided call from the application to indicate whether the service has been provided or not. If that call does not happen within the timeout of $T_{service}$ the service provisioning is considered to have failed. From the point of view of the service provider, when it receives a ServiceRequest with a service descriptor for which it can provide the service, the service is provided to the origin of the service request message. From the point of view of some forwarding peer $v_c$, when it receives a service request from some previous hop $v_{ph}$, it forwards it to the next hop $v_{nh}$, $v_c$ then expects feedback from $v_{ph}$ on whether the service provisioning was successful or not. If the feedback does not arrive within the timeout $T_{feedback}$ the service provisioning is considered to have failed. If the feedback arrives it is forwarded to the same next hop that was taken by the corresponding service request before. This is implemented by assigning a unique identifier to every service request (rid) and remembering the next hops taken in the $n_h$ array.

In the following a first pseudo code will be provided in order to detail an embodiment of the inventive network peer or communication method.

```
Initialize

    nh ← empty array


function requestService(serviceDescriptor)

    rid← generateUniqueRequestID()

    expect call serviceProvided(rid,*) in Tservice

    forwardServiceRequest(null,rid,self,serviceDescriptor)


receive ServiceRequest(rid,origin,serviceDescriptor) from src

    expect Feedback(rid,*) from src in Tfeedback

    If offeredServices (self) ∩ matchedServices (serviceDescriptor) ≠ then

        provide service to origin

    else

        forwardServiceRequest(src, rid, origin, target)

    end
            .

function forwardServiceRequest(ph, rid, origin, serviceDescriptor)

    candidateNextHops←outneigh(self )

    nextHop ← selectNextHop(serviceDescriptor, self , candidateNextHops)

    send ServiceRequest(rid, origin, serviceDescriptor) to nextHop

    nhrid ← nextHop


function serviceProvided(rid,success)

    send Feedback(rid,success) to nhrid


receive Feedback(rid,success) from src

    send Feedback(rid,success) to nhrid
```

The function requestService and the serviceRequest syntax illustrate how a service request message is composed at a service requestor. It can be seen that the service request message may contain information of a previous hop, a service ID, a service requestor and a service descriptor. This information is set differently, in dependence whether the service request message is composed at the service requestor or forwarded by in intermediate network peer. Furthermore, if the service request is received, which is indicated by the receive service request function, it is checked, whether the receiver of the ServiceRequest is capable of providing the requested service itself, and if so, the service is provided to the origin. If the receiver of the service request message is not capable of providing the requested service, the service request is forwarded.

The function forwardServiceRequest illustrates how the forwarding of a service message is carried out. A list of candidate hops is evaluated in order to determine the next network peer to forward the service request message to. The evaluation of the candidate hops is done on the basis of forwarded feedback messages, and in one embodiment of the present invention, it is based on determined reliability information from forwarded feedback messages.

Once the service is provided or after a certain time $T_{service}$ has expired, the function serviceProvided composes a feedback message which comprises the service ID and an indicator, indicating whether the service was provided successfully or not. Upon reception of a feedback message, the feedback message is forwarded if the receiver of the feedback message was not the service provider, otherwise the feedback message is not forwarded anymore.

In one embodiment, the forward feedback protocol ignores all of the service provisioning failures. The above described algorithm can therefore be modified to report failures to the failure predictor 230 and then use the failure predictor 230 to decide which next hops to avoid. A second version of the forward feedback protocol 220 pseudo code is presented below.

**Initialize**

    failurePredictor ← create new failure predictor

    nh ← empty array

    sd ← empty array


**function** requestService(serviceDescriptor)

    rid← generateUniqueRequestID()

    **expect call** serviceProvided(rid,*) **in** Tservice

    forwardServiceRequest(**null**, rid, **self**, serviceDescriptor)


**receive** ServiceRequest(rid, origin, serviceDescriptor) **from** src

    **expect** Feedback(rid, *) **from** src **in** Tfeedback

    **If** offeredServices( **self** ) ∩ matchedServices(serviceDescriptor) ≠ □ **then**

        provide service to origin

    **else**

        forwardServiceRquest(src,rid, origin, target)

    **end**


**function** forwardServiceRequest(ph,rid, origin, serviceDescriptor)

    candidateNextHops←outneigh(self)

failurePredictor.getSuspectedNextHops(ph,serviceDescriptor)

nextHop ← selectNextHop(serviceDescriptor, **self**, candidateNextHops)

**send** ServiceRequest(rid, origin, serviceDescriptor) **to** nextHop

nhrid ← nextHop

sdrid ← serviceDescriptor


**function** serviceProvided(rid,success)

    failurePredictor.reportSample(null, nhrid, sdrid, success)

    **send** Feedback(rid,success) **to** nhrid


**receive** Feedback(rid,success) **from** src

    failurePredictor.reportSample(src, nhrid, sdrid, success)

    **send** Feedback(rid,success) **to** nhrid


**timeout on** Feedback(rid,*) **from** src

    failurePredictor.reportSample(src, nhrid, sdrid, **false**)

```
timeout on call serviceProvided(rid,*)
        failurePredictor.reportSample(null, nhrid, sdrid, false)
        send Feedback(rid,null) to nhrid


receive malformed message or unexpected message from src
        // this type of failure is ignored
```

The first forward feedback protocol pseudo code ignored all of the service provisioning failures. By modifying the algorithm to report failures to the failure predictor and then use the failure predictor to decide which next hops to avoid a complete version of the forward feedback protocol is presented in the second pseudo code. What is reported to the failure predictor are samples describing the context in which the service request was forwarded and whether that forwarding resulted in a successful service provisioning or not. A sample $s = (ph, nh, sd, b) \in V \times V \times D \times \{0, 1\}$ consists of the previous hop (ph = previous hop) from which the service request was received, a next hop (nh = next hop) to which the request was forwarded, the request's service descriptor (sd = service descriptor) and a Boolean flag b indicating whether the hop led to a successful service provisioning. When b = 1 then the sample is positive, negative otherwise. The previous hop is null at the requestor and the next hop is null at the provider. Given a set of reported samples, the failure predictor 230 returns the suspected next hops that are likely to cause a failure in service provisioning. The suspected next hops are then excluded from the list of candidate next hops and may not be considered for service provisioning anymore. A next hop can be suspected only temporarily, as samples are reported the set of suspected next hops returned by the failure predictor may change. It may also happen that all next hops are suspected; in this case the service request is dropped. This is defined as the NHnull event.

The failure predictor accumulates samples and based on them makes predictions if a context triple (ph, nh, sd) $\in V \times V \times D$ will result in successful service provisioning or not. The learning task is to learn the probability of success given a context triple and the set of samples. By employing the learning method called the probabilistic concepts (p-concepts) learning, cf. Kearns and Schapire, "Efficient distribution-free learning of probabilistic concepts, Computational Learning Theory and Natural Learning Systems, Volume I: Constraints and Prospect", edited by Stephen Jose Hanson, George A. Drastal, and Ronald L. Rivest, Bradford/MIT Press, vol. 1, 1994, which is based on Rivest's decision lists, cf. Ronald L. Rivest, "Learning decision lists", Machine Learning 2 (1987), no. 3, 229-246.

A concept is a boolean function defined over a domain set X. Rivest has shown that given a set of samples (x, b) where $x \in X$ and $b \in \{0, 1\}$ is the label an unknown concept can be learned efficiently if the concept belongs to the set k - DL, i.e. decision lists (DL = decision list) with conjunctive clauses of size k. The set k - DL is expressive enough to include decision trees and the sets k - DNF and k - CNF (DNF = dinjunctive normal form, CNF = conjunctive normal form), i.e. respectively the disjunctive and conjunctive normal forms with k literals per clause. Kearns et al. extend this result to probabilistic concepts i.e. functions of the form $c : X \to [0, 1]$ where c(x) is interpreted as the probability of observing a positive sample (x, b = 1).

Kearns defines the probabilistic decision list c over the set of predicates $F_n$ to be $(f_1, r_1), ... , (f_s, r_s)$, where $f_i \in F_n$ and $r_i \in [0, 1]$. The value of c(x) is $r_j$ for the smallest j such that $f_j(x)$ is true. The decision list is ω-converging if $|r_i - \omega| \geq |r_i+1 -\omega|$ for $1 \leq i < s$. Such list is output by the Kearns' algorithm. A special case of the list, for ω = ½ is used, which corresponds to the list with decreasing certainty. The predicates that are most certain, i.e. those with values of $r_j$ closest to 0 or 1, are in the front of the list and are matched against first. In this case the domain X is the set of all context triples, $X = V \times V \times D$. The set of predicates $F_n$ has the following properties:

- each predicate is either a single literal or a conjunction between two or more literals,
- there are three types of literals:

    (1) previous hop literals of the form ph = $v_i$, $v_i \in V$,
    (2) next hop literals nh = $v_i$, $v_i \in V$, and
    (3) service descriptor literals sd = $d_i$, $d_i \in D$, and

- a predicate can refer to at most one literal of each type, from this it follows that a predicate can have a maximum of 3 literals.

For example, the predicate ph = $v_{12} \wedge$ sd = $d_4$ belongs to $F_n$ while the predicate ph = $v_{12} \wedge$ sd = $d_4 \wedge$ ph = $v_{15}$

does not. The set of predicates $F_n$ is induced from the sample set S before running the Kearns p-concepts algorithm. For every sample s = (ph = $v_i$, nh = $v_j$ , sd = $d_k$, b) $\in$ S there can be a maximum of 7 corresponding predicates generated:

(1) ph = $v_i$,
(2) nh = $v_j$,
(3) sd = $d_k$,
(4) ph = $v_i \wedge$ nh = $v_j$,
(5) ph = $v_i \wedge$ sd = $d_k$,
(6) nh = $v_i \wedge$ sd = $d_k$, and
(7) ph = $v_i \wedge$ nh = $v_i \wedge$ sd =$d_k$.

Given the set of samples S and the set of predicates $F_n$ induced from it the p-concepts algorithm runs and produces the decision list. When the function getSuspectedNextHops is called with arguments ph and sd, for each possible nh a context triple (ph, nh, sd) is created and the decision list is consulted to compute the probability of success for that particular context triple. If that probability is lower than a certain threshold $p_{min}$ then nh is deemed suspected. When there is no matching predicate found on the decision list, a probability of 1.0 is assumed. In particular this occurs for all context triples when the decision list is empty at the beginning when S has no elements. This is referred to as the initial optimism of the failure predictor. The size of the set S of samples does not follow the minimal bounds described by Kearns, as these bounds are impractical. Even if relatively large errors are allowed ($\gamma$ = 0.1, $\varepsilon$ = 0.1, $\delta$ = 0.1) the minimum amount of required samples is on the order of $10^6$. Instead a simple heuristic is used for managing the set of samples.

There are two FIFO queues $S_+$ and $S_-$, containing correspondingly only positive samples or negative samples. The upper bounds on the sizes of these queues are set to $S^{max}_+$ and $S^{max}_-$ and are constants. When a new sample arrives it is inserted at the beginning of the queue. When the size of the queue is larger than its maximum size the last element of the queue is removed. The set of samples S is set to $S_- \cup S_+$ before predicate induction and running the p-concepts algorithm. The second bound inherent to the Kearns' algorithm is the minimum number of samples matching a predicate, independently of the value of the label b that are necessary to consider that predicate a part of the decision list. That bound is unfortunately not practical either. A much lower bound $n_{accept}$ can be used, which can be experimentally shown to be sufficient. Recomputing the decision list every time a new sample arrives is costly. The decision list periodically computes every $n_r$-th sample.

In a custom-developed event-driven simulator, each event occurs at a specific moment of the virtual simulated time and all references to time in this section pertain to this simulated time not the real time. The service location graph is generated by placing the peers on a unit ring as in Chord, cf. Ion Stoica, Robert Morris, David Karger, Frans Kaashoek, and Hari Balakrishnan, "Chord: A scalable Peer-To-Peer lookup service for internet applications", pp. 149-160. The connections are created such that the first neighbor connects to the node that is the closest to the current node in terms of the ring distance and every next node is twice as distant until the maximum distance is reached. The maximum theoretical ring distance is 0.5, however the maximum ring distance a single connection can span be set to 0.1. The goal of this is to artificially increase the average number of routing hops required. This provides a more challenging setting for evaluating the algorithm. With the increased number of hops the probability of encountering a faulty node during service request routing is higher.

Each correct, i.e. non-faulty, peer in the simulated overlay generates service requests in a Poisson process. The generation rates are identical across all the nodes and equal to one request per second. Each time a service request is generated its service descriptor is selected uniformly randomly from the set of all possible descriptors.

Simulation execution is divided into measurement epochs. At the beginning of each measurement epoch all the measured variables are reset. At the end of a measurement epoch the accumulated measurements are logged. Each measurement epoch by default lasts 10s. All messages are delivered with a latency uniformly distributed between 100ms and 200ms. The underlying network topology is not explicitly simulated. This network model is sufficient for evaluating this protocol.

There are a number of ways in which the peers can deviate from the forward feedback protocol. The failures are modeled in the following way. A deviation $\pi \in$ P is an automatic change in the forward feedback protocol that a peer follows. An unconditional deviation $\pi \in P_u$ is a deviation that does not depend on the private state of the peer, which in particular includes the history of received messages. A conditional deviation $\pi \in P_c$ is a deviation that does depend on the private state. P = $P_u \in P_c$. A behavior $\varphi \in 2^p$ of a peer is a set of deviations that constitute the behavior. A correct peer has $\varphi$ = Ø. The following set $P_u$ of possible unconditional deviations is considered:

- G - general failures

    - GDef - fail to provide the service, or provide the service in an unsatisfactory way

- GNoFP - do not report any samples to failure predictor
- GNoWorkload - do not send any service requests

- M - mutation failures

  - MRq - send a mutated service request, any of the fields modified
  - MRe - send a mutated service response, any of the fields modified
  - MF - send a mutated feedback message, any of the field modified or:
  - MF0 - change the feedback message to failure
  - MF1 - change the feedback message to success

- O - omission failures - a message is not sent as it is expected

  - ORq - omit sending or forwarding the service request
  - ORe - omit sending or forwarding the service response
  - OF - omit sending or forwarding the feedback message

- I - insertion failures - a message is sent and according to the protocol it should not be sent - this class of failures into a hierarchy are not expanded as they can be dealt with trivially.

Conditional deviations have the form $c \rightarrow \pi \in P_u$, $c \in C$ and $\pi \in P$, which reads as "condition c causes an unconditional deviation n". The following conditions (set C) are defined:

- Ctx[*] - the context triple of the received feedback message or service request has the property
  Ctx[ph=$v_i$] - previous hop is $v_i$
  Ctx[nh=$v_i$] - next hop chosen is $v_i$
  Ctx[sd=$d_i$] - service descriptor set to $d_i$
- F[success=s] - the received feedback message has the success flag set to s
- Omniscient adversary - it is assumed that some adversary has complete knowledge of all private states and sent/received messages on all faulty nodes in the network, some new conditions can be derived from that knowledge:

    PFaulty - true if the service provider is a faulty node
    RFaulty - true if the service requestor is a faulty node

- Predicate involving conditions - generalization of the conditions to arbitrary Boolean expressions in which other conditions appear as literals

The resilience of the forward feedback protocol in the cases is tested in which a fraction $\alpha$ of peers exhibits the same faulty behavior $\varphi_f$ and the 1 - $\alpha$ fraction of peers are correct. The faulty peers are uniformly randomly spread in the population.
The following cases of $\varphi_f$ are considered:

- DEFECTOR - GDef, GNoFP, GNoWorkload
- DROPPER - ORq, OF, GNoFP, GNoWorkload
- WHITELIAR - MF1, GDef, GNoFP, GNoWorkload
- BADMOUTHER - MF0, GDef, GNoFP, GNoWorkload
- SMARTLIAR - PFaulty $\rightarrow$ MF1, ¬PFaulty$\rightarrow$ MF0, GDef, GNoFP, GNoWorkload
- QUIET - GNoWorkload

All of the behaviors above do not run an instance of failure predictor (GNoFP) since this can only improve the cooperation levels. Neither do they generate any service requests (GNoWorkload) since that can potentially increase cooperation.
The DEFECTOR behaves correctly in all aspects except it never provides a good service. The DROPPER consistently drops all service requests and feedback messages. The WHITELIAR sets the success flag to true for all feedback messages that it forwards. Conversely, the BADMOUTHER sets the success flag to false. The SMARTLIAR is the worst-case form of lying in which the faulty service providers are whitelied about and correct service providers are badmouthed about. The QUIET behavior is used to create the baseline scenario with the same amount of service request traffic as in the faulty behavior cases.
Apart from different behaviors different allocations of services to peers are also used:

- one-on-one - each peer provides only one service, each service is provided by only one peer
- many-on-one - the number of services is equal to the number of peers, each service is provided by an average of 4 peers

In the case of one-on-one if a provider is faulty there is no other way to reach a service, in the case of many-on-one there is a chance a service can be reached on alternative correct providers. In both cases there is one service descriptor per service and every service descriptor matches only one service. The parameters during the simulation are as follows. There are 200 nodes in the network. The $p_{min}$ probability is set to 0.5, i.e. the decision list entry must have the probability of at least 0.5 for the context triple to be considered successful by the failure predictor. $S^{max}_+$ and $S^{max}_-$ are set to 1000, once the queues are saturated the number of positive and negative samples are equal making the sample set balanced. The decision list is relearned every $n_r$ = 30 samples. There are $n_{accept}$ = 10 matching samples required before a predicate can be put on the decision list. For all $\varphi_f$, $\alpha$ is 0.25, i.e. 25% of the population is faulty. $T_{feedback}$ and $T_{service}$ are both set to 10s.

The following events in the system are counted:

- coop - successful service provisioning
- def - the service provider provided the service to the requestor in an unsatisfactory way or did not provide it at all
- NHnull - all next hops are suspected by the failure predictor
- SRtimeout - at the requestor, the serviceProvided function has not been called by the application before $T_{service}$, i.e. if the application is not faulty then the service has not been provided
- FBtimeout - at the forwarder or service provider, the feedback message has not arrived before $T_{feedback}$

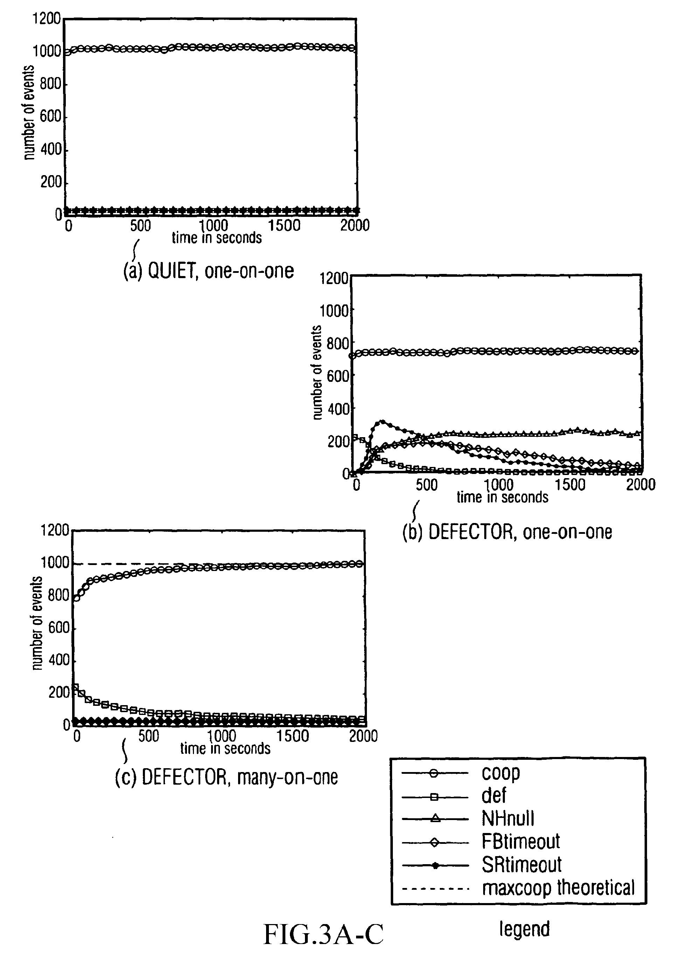

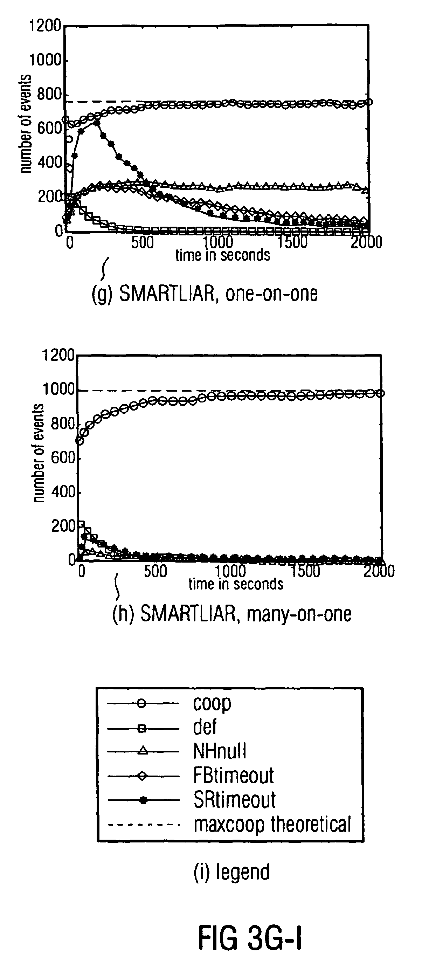

Each of these counts is a cumulative aggregated over one measurement epoch of 10s. The results are presented in Figs. 3a-i, where view graphs showing the number of the respective events versus the simulation time are shown.

The scenario depicted in Fig. 3a turns off sending of service requests for 25% of the peers to provide the baseline for the rest of the experiments in which the same amount of peers have the GNoWorkload deviation. The maximum possible rate of cooperations (1000) per measurement epoch is attained. In scenario Fig. 3b there is only one service per peer, the network learns to drop the service requests immediately at the requestor (rise in NHnull) rather than deliver them and risk faulty service requests. The maximum possible cooperation rate is 750, since 25% of the services lying on the faulty nodes cannot be provider in no other way.

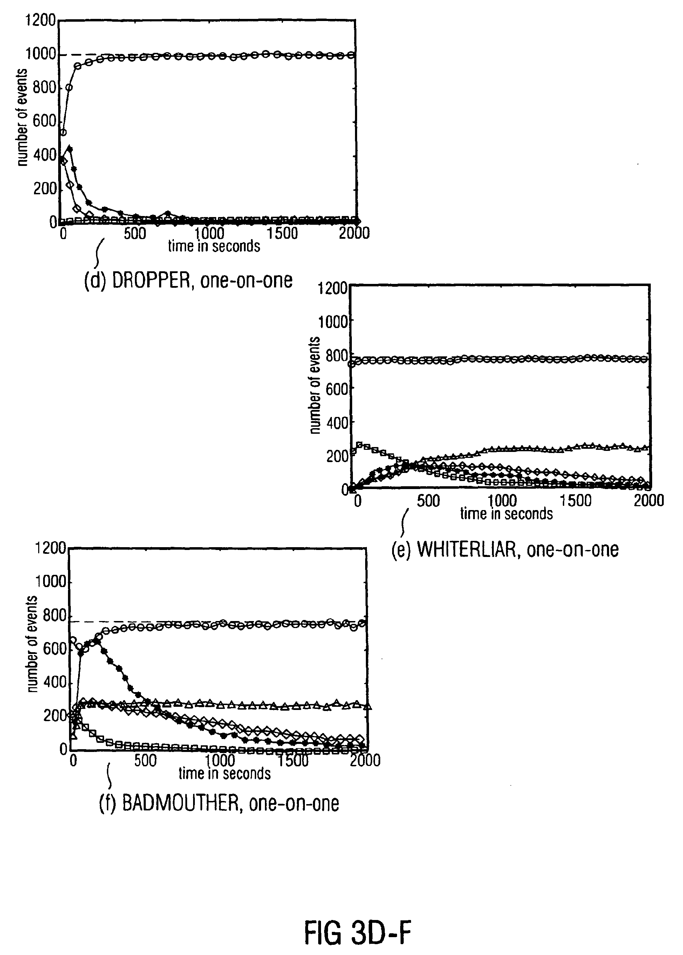

The scenario Fig. 3c is the same as the scenario Fig. 3b, with the difference that this time there are many peers corresponding to a single service. For a given service, if some of the nodes providing it are faulty then alternatives can be found. The network learns to that and the number of cooperations reaches its theoretical maximum of 1000. The scenario Fig. 3d is an illustration of how partially faulty nodes are still used in the network despite loosing some of their functionality. Each DROPPER is responsible for serving a single service that no other node can provide. If it were isolated from the network then there would be no way this service could be provided. The network learns to avoid droppers for forwarding, the number of timeouts decreases, but they are still used as service providers, over time the maximum cooperation rate is reached.

The scenarios depicted in Figs. 3e and 3f show that neither form of consistent lying does prevent from reaching the maximum cooperation levels. Neither does it prevent from keeping the number of failed service provisioning high. Although in case of Fig. 3e it takes a substantial amount of time to learn that GDef peers are whitelied about.

The scenarios Fig. 3g and Fig. 3h demonstrate how the network handles the most mischievous form of lying. In both cases one-on-one and many-on-one the maximum theoretical cooperation level is reached. In scenario Fig. 3g there are initially a high number of timeouts caused by a sudden increase of falsely suspected next hops in failure predictors that have not gathered enough samples to operate precisely. Over time the failure predictors are more confident that the negative feedback correlates with previous hops (the liars) rather than specific next hops or service descriptors. Consequently, the service requests from these previous hops are dropped. In this way the liars gradually loose reliable next hops they can forward service requests to. In the end there are no next hops that can accept service requests from the liars and liars effectively become droppers. Once that happens they are no longer used as forwarders and there is no way they can inject lies into feedback messages. The liars are eliminated, and cooperation stabilizes.

In all of the test cases the level of cooperation reaches its theoretical maximum in the equilibrium even when 25% of the nodes are faulty, which in large scale systems is a significant fraction. The feasibility evaluation does not cover all the possible types of misbehavior but are limited to only the types of misbehavior that are typically considered in other approaches. This demonstrates that the protocol is at least as robust as the others.

Embodiments of the present invention provide the advantage that the cooperation method or algorithm integrates into the existing hop-by-hop service location protocols that are known from prior art. Embodiments of the present invention provide a protocol extension which is built from scratch, fully specifying all the messages that are sent and received without delegating any functionality to other layers such as a DHT or authentication infrastructure. Embodiments further provide the advantage that there is no need for feedback incentives as feedback is obligatory and feedback withholding is treated as a failure.

Moreover, partially faulty peers are not completely isolated from the network with embodiments of the present invention, since the usage of their still correct functionality is optimized, in one preferred embodiment even maximized. The inventive communication method is simple and light weight, inventive network peers do not need to exchange any information on the observations or state and, furthermore, only single bit feedback messages are exchanged.

Depending on certain implementation requirements of the inventive methods, the inventive methods can be implemented in hardware or in software. The implementation can be performed using a digital storage medium, in particular a disk, a DVD, or CD having electronically readable control signals stored thereon, which can cooperate with the programmable computer system such that the inventive methods are performed. Generally, the present invention is therefore, a computer program product with a program code stored on a machine readable carrier, the program code being configured for performing at least one of the inventive methods, when the computer product runs on a computer. In other words, the inventive methods are, therefore, a computer program having a program code for performing the inventive methods, when the computer program runs on a computer.

## Claims

1. Network peer (100) having associated a first service ID, comprising:

   a means (110) for, upon receipt of a first service request message having a first unique request ID and requesting a service with a second service ID being different from the first service ID, forwarding the first service request message on to another network peer;
   a means (120) for, upon receipt of a feedback message having the first unique request ID, forwarding the feedback message on to the another network peer, the feedback message comprising an indication whether the service with the second service ID has been provided successfully or not;
   a means (130) for, upon receipt of a second service request message having a second unique request ID and requesting a service with the second service ID, forwarding the second service request message on to a network peer selected based on the indication.

2. Network peer of claim 1, further comprising a means for composing a service request message having a unique request ID and requesting a service with a service ID.

3. Network peer (100) of one of the claims 1 or 2, further comprising a means for composing a feedback message having a unique ID associated with a service request message.

4. Network peer (100) of one of the claims 1 to 3, further comprising a means for, upon receipt of a different service request message having a different request ID and requesting a service with the first service ID, providing the service with the first service ID.

5. Network peer (100) of one of the claims 3 or 4, wherein the means for composing the service request message is further adapted for starting an expiration timer and wherein the means for composing the feedback message is adapted for, upon expiration of said expiration timer before the service with the service ID was provided, composing a negative feedback message having a negative indication and for, upon successful reception of the service with the service ID before expiration of said expiration timer, composing a positive feedback message having a positive indication.

6. Network peer (100) of one of the claims 1 to 5, wherein the means for forwarding the first service request message is adapted for starting a second expiration timer, when forwarding the first service request message and wherein the means for forwarding the second service request message is adapted for assuming the service with the second service ID being not provided successfully if the feedback message having the first unique request ID is not received before expiration of said second expiration timer.

7. Network peer (100) of one of the claims 5 or 6, wherein the means for composing the feedback message is further adapted for including a single bit indicating whether the feedback message is positive or negative in the feedback message.

8. Network peer (100) of one of the claims 1 to 7, wherein the means for forwarding the first or second service request message is further adapted for including information on itself, the first or second unique request ID, a network peer the first or second service request message was received from, an origin of the first or second service request message, or a target network peer in the forwarded first or second service request message.

9. Network peer (100) of one of the claims 1 to 8, wherein the means for forwarding the second service request message is adapted for selecting the network peer from a table comprising failure predictions based on the indication.

10. Network peer (100) of claim 9, wherein the failure predictions are based on probabilistic concepts learning.

11. Network peer (100) of one of the claims 9 or 10, where the failure predictions referred to one of or a combination of a previous network peer a message was transmitted or forwarded from, a next network peer a message could be transmitted or forwarded to, or a service ID.

12. Network peer (100) of one of the claims 1 to 11, wherein the means for forwarding the feedback message with the first unique request ID is adapted for forwarding the feedback message to the same network peer the first service request message with the first unique ID has been forwarded to.

13. Network peer (100) of one of the claims 1 to 12, further having a means for maintaining routing tables and for providing service location information.

14. Network peer (100) of claim 13, wherein the means for maintaining routing tables maintains a part of a distributed hash table.

15. Method for communicating in a peer-to-peer network based on a first service ID comprising the steps of:

forwarding a first service request message on to a network peer upon receipt of the first service request message having a first unique request ID and requesting a service with a second service ID being different from the first service ID;
forwarding a feedback message having the first unique request ID upon receipt of the feedback message to the network peer, the feedback message comprising an indication whether the service with the second service ID has been provided successfully or not; and
forwarding a second service request message having a second unique request ID requesting a service with the second service ID on to a network peer selected based on the indication.

16. Computer program having a program code for performing the method according to claim 15, when the program code runs on a computer.

**Patentansprüche**

1. Netzwerkpartner (100), dem eine erste Dienst-ID zugeordnet ist und der Folgendes umfasst:

eine Einrichtung (110) zum Weiterleiten einer ersten Dienstanforderungsnachricht an einen anderen Netzwerkpartner nach Empfang der ersten Dienstanforderungsnachricht, die eine erste eindeutige Anforderungs-ID aufweist und einen Dienst mit einer zweiten Dienst-ID anfordert, die sich von der ersten Dienst-ID unterscheidet;
eine Einrichtung (120) zum Weiterleiten, nach Empfang einer Rückmeldungsnachricht, die die erste eindeutige Anforderungs-ID aufweist, der Rückmeldungsnachricht an den anderen Netzwerkpartner, wobei die Rückmeldungsnachricht eine Angabe bezüglich dessen umfasst, ob der Dienst mit der zweiten Dienst-ID erfolgreich bereitgestellt wurde oder nicht;
eine Einrichtung (130) zum Weiterleiten, nach Empfang einer zweiten Dienstanforderungsnachricht, die eine zweite eindeutige Anforderungs-ID aufweist und einen Dienst mit der zweiten Dienst-ID anfordert, der zweiten Dienstanforderungsnachricht an einen Netzwerkpartner, der auf der Basis der Angabe ausgewählt wird.

2. Netzwerkpartner gemäß Anspruch 1, der ferner eine Einrichtung zum Erstellen einer Dienstanforderungsnachricht umfasst, die eine eindeutige Anforderungs-ID aufweist und einen Dienst mit einer Dienst-ID anfordert.

3. Netzwerkpartner (100) gemäß einem der Ansprüche 1 oder 2, der ferner eine Einrichtung zum Erstellen einer Rückmeldungsnachricht umfasst, die eine eindeutige ID aufweist, die einer Dienstanforderungsnachricht zugeordnet ist.

**4.** Netzwerkpartner (100) gemäß einem der Ansprüche 1 bis 3, der ferner eine Einrichtung zum Bereitstellen des Dienstes mit der ersten Dienst-ID nach Empfang einer anderen Dienstanforderungsnachricht, die eine andere Anforderungs-ID aufweist und einen Dienst mit der ersten Dienst-ID anfordert, umfasst.

**5.** Netzwerkpartner (100) gemäß einem der Ansprüche 3 oder 4, bei dem die Einrichtung zum Erstellen der Dienstanforderungsnachricht ferner dahin gehend angepasst ist, einen Ablaufzeitgeber zu starten, und bei dem die Einrichtung zum Erstellen der Rückmeldungsnachricht dahin gehend angepasst ist, nach Ablauf des Ablaufzeitgebers, bevor der Dienst mit der Dienst-ID bereitgestellt wurde, eine negative Rückmeldungsnachricht zu erstellen, die eine negative Angabe aufweist, und nach erfolgreichem Empfang des Dienstes mit der Dienst-ID vor Ablauf des Ablaufzeitgebers eine positive Rückmeldungsnachricht zu erstellen, die eine positive Angabe aufweist.

**6.** Netzwerkpartner (100) gemäß einem der Ansprüche 1 bis 5, bei dem die Einrichtung zum Weiterleiten der ersten Dienstanforderungsnachricht dahin gehend angepasst ist, beim Weiterleiten der ersten Dienstanforderungsnachricht einen zweiten Ablaufzeitgeber zu starten, und bei dem die Einrichtung zum Weiterleiten der zweiten Dienstanforderungsnachricht dahin gehend angepasst ist, anzunehmen, dass der Dienst mit der zweiten Dienst-ID nicht erfolgreich bereitgestellt wird, falls die Rückmeldungsnachricht, die die erste eindeutige Anforderungs-ID aufweist, nicht vor Ablauf des zweiten Ablaufzeitgebers empfangen wird.

**7.** Netzwerkpartner (100) gemäß einem der Ansprüche 5 oder 6, bei dem die Einrichtung zum Erstellen der Rückmeldungsnachricht ferner dahin gehend angepasst ist, ein einzelnes Bit zu umfassen, das angibt, ob die Rückmeldungsnachricht positiv oder negativ in der Rückmeldungsnachricht ist.

**8.** Netzwerkpartner (100) gemäß einem der Ansprüche 1 bis 7, bei dem die Einrichtung zum Weiterleiten der ersten oder der zweiten Dienstanforderungsnachricht ferner dahin gehend angepasst ist, Informationen über sich selbst, die erste oder die zweite eindeutige Anforderungs-ID, einen Netzwerkpartner, von dem die erste oder die zweite Dienstanforderungsnachricht empfangen wurde, einen Ursprung der ersten oder der zweiten Dienstanforderungsnachricht oder einen Ziel-Netzwerkpartner in der weitergeleiteten ersten oder zweiten Dienstanforderungsnachricht zu umfassen.

**9.** Netzwerkpartner (100) gemäß einem der Ansprüche 1 bis 8, bei dem die Einrichtung zum Weiterleiten der zweiten Dienstanforderungsnachricht dahin gehend angepasst ist, den Netzwerkpartner aus einer Tabelle, die Ausfallvorhersagen umfasst, auf der Basis der Angabe auszuwählen.

**10.** Netzwerkpartner (100) gemäß Anspruch 9, bei dem die Ausfallvorhersagen auf einem Lernen anhand von probabilistischen Konzepten beruhen.

**11.** Netzwerkpartner (100) gemäß einem der Ansprüche 9 oder 10, bei dem die Ausfallvorhersagen auf eine(n) oder eine Kombination eines vorherigen Netzwerkpartners, von dem eine Nachricht gesendet oder weitergeleitet wurde, eines nächsten Netzwerkpartners, an den eine Nachricht gesendet oder weitergeleitet werden könnte, oder einer Dienst-ID Bezug genommen haben.

**12.** Netzwerkpartner (100) gemäß einem der Ansprüche 1 bis 11, bei dem die Einrichtung zum Weiterleiten der Rückmeldungsnachricht mit der ersten eindeutigen Anforderungs-ID dahin gehend angepasst ist, die Rückmeldungsnachricht an denselben Netzwerkpartner weiterzuleiten, an den die erste Dienstanforderungsnachricht mit der ersten eindeutigen ID weitergeleitet wurde.

**13.** Netzwerkpartner (100) gemäß einem der Ansprüche 1 bis 12, der ferner eine Einrichtung zum Aufrechterhalten von Leitwegtabellen und zum Bereitstellen von Dienstpositionsinformationen aufweist.

**14.** Netzwerkpartner (100) gemäß Anspruch 13, bei dem die Einrichtung zum Aufrechterhalten von Leitwegtabellen einen Teil einer verteilten Hash-Tabelle aufrechterhält.

**15.** Verfahren zum Kommunizieren in einem Partner-zu-Partner-Netzwerk auf der Basis einer ersten Dienst-ID, das folgende Schritte umfasst:

Weiterleiten einer ersten Dienstanforderungsnachricht an einen Netzwerkpartner nach Empfang der ersten Dienstanforderungsnachricht, die eine erste eindeutige Anforderungs-ID aufweist und einen Dienst mit einer zweiten Dienst-ID, die sich von der ersten Dienst-ID unterscheidet, anfordert;
Weiterleiten einer Rückmeldungsnachricht, die die erste eindeutige Anforderungs-ID aufweist, nach Empfang der Rückmeldungsnachricht, an den Netzwerkpartner, wobei die Rückmeldungsnachricht eine Angabe bezüglich dessen umfasst, ob der Dienst mit der zweiten Dienst-ID erfolgreich bereitgestellt wurde oder nicht;
Weiterleiten einer zweiten Dienstanforderungsnachricht, die eine zweite eindeutige Anforderungs-ID aufweist, die einen Dienst mit der zweiten Dienst-ID anfordert, an einen auf der Basis der Angabe ausgewählten Netzwerkpartner.

16. Computerprogramm, das einen Programmcode zum Durchführen des Verfahrens gemäß Anspruch 15 aufweist, wenn der Programmcode auf einem Computer abläuft.

**Revendications**

1. Pair d'un réseau (100) ayant, y associée, une première ID de service, comprenant:

un moyen (110) pour envoyer, à la réception d'un premier message de demande de service ayant une première ID de demande unique et demandant un service avec une deuxième ID de service différente de la première ID de service, le premier message de demande de service à un autre pair du réseau;
un moyen (120) pour envoyer, à la réception d'un message de rétroaction ayant la première ID de demande unique, le message de rétroaction à un autre pair du réseau, le message de rétroaction comprenant une indication sur si le service à la deuxième ID de service a été fourni avec succès ou non;
un moyen (130) pour envoyer, à la réception d'un deuxième message de demande de service ayant une deuxième ID de demande unique et demandant un service à la deuxième ID de service, le deuxième message de demande de service à un pair du réseau sélectionné sur base de l'indication.

2. Pair d'un réseau selon la revendication 1, comprenant par ailleurs un moyen pour composer un message de demande de service ayant une ID de demande unique et demandant un service avec une ID de service.

3. Pair d'un réseau (100) selon l'une des revendications 1 ou 2, comprenant par ailleurs un moyen pour composer un message de rétroaction ayant une ID unique associée à un message de demande de service.

4. Pair d'un réseau (100) selon l'une des revendications 1 à 3, comprenant par ailleurs un moyen pour fournir, à la réception d'un message de demande de service différent ayant une ID de demande différente et demandant un service à la première ID de service, le service à la première ID de service.

5. Pair d'un réseau (100) selon l'une des revendications 3 ou 4, dans lequel le moyen pour composer le message de demande de service est par ailleurs adapté pour faire démarrer une minuterie d'expiration et dans lequel le moyen pour composer le message de rétroaction est adapté pour composer, à l'expiration de ladite minuterie d'expiration avant que n'ait été fourni le service à l'ID de service, un message de rétroaction négatif présentant une indication négative et pour composer, à la réception fructueuse du service à l'ID de service avant expiration de ladite minuterie d'expiration, un message de rétroaction positif présentant une indication positive.

6. Pair d'un réseau (100) selon l'une des revendications 1 à 5, dans lequel le moyen pour envoyer le premier message de demande de service est adapté pour faire démarrer une deuxième minuterie d'expiration lors de l'envoi du premier message de demande de service et dans lequel le moyen pour envoyer le deuxième message de demande de service est adapté pour supposer que le service à la deuxième ID de service n'est pas fourni avec succès si le message de rétroaction ayant la première ID de demande unique n'est pas reçu avant expiration de ladite deuxième minuterie d'expiration.

7. Pair d'un réseau (100) selon l'une des revendications 5 ou 6, dans lequel le moyen pour composer le message de rétroaction est par ailleurs adapté pour comporter un seul bit indiquant si le message de rétroaction est positif ou négatif dans le message de rétroaction.

8. Pair d'un réseau (100) selon l'une des revendications 1 à 7, dans lequel le moyen pour envoyer le premier ou le deuxième message de demande de service est par ailleurs adapté pour comporter des informations sur lui-même, la première ou la deuxième ID de demande unique, un pair du réseau duquel a été reçu le premier ou le deuxième message de demande de service, une origine du premier ou le deuxième message de demande de service, ou un pair du réseau cible dans le premier ou le deuxième message de demande de service.

9. Pair d'un réseau (100) selon l'une des revendications 1 à 8, dans lequel le moyen pour envoyer le deuxième message de demande de service est adapté pour sélectionner le pair du réseau d'un tableau comprenant des prédictions d'erreur sur base de l'indication.

10. Pair d'un réseau (100) selon la revendication 9, dans lequel les prédictions d'erreur sont basées sur l'apprentissage de concepts de probabilité.

11. Pair d'un réseau (100) selon l'une des revendications 9 ou 10, dans lequel les prédictions d'erreur se référaient à l'un parmi ou une combinaison d'un pair de réseau antérieur duquel un message a été transmis ou envoyé, d'un pair de réseau suivant auquel un message pourrait être transmis ou envoyé, ou une ID de service.

12. Pair d'un réseau (100) selon l'une des revendications 1 à 11, dans lequel le moyen pour envoyer le message de rétroaction à la première ID de demande unique est adapté pour envoyer le message de rétroaction au même pair de réseau auquel a été envoyé le premier message de demande de service à la première ID unique.

13. Pair d'un réseau (100) selon l'une des revendications 1 à 12, présentant par ailleurs un moyen pour maintenir des tableaux de routage et pour fournir des informations d'emplacement de service.

14. Pair d'un réseau (100) selon la revendication 13, dans lequel le moyen pour maintenir des tableaux de routage maintient une partie d'un tableau d'informations parasites distribuées.

15. Procédé pour communiquer dans un réseau pair à pair sur base d'une première ID de service, comprenant les étapes consistant à:

envoyer un premier message de demande de service à un pair du réseau à la réception du premier message de demande de service ayant une première ID de demande unique et demandant un service avec une deuxième ID de service différente de la première ID de service;
envoyer un message de rétroaction ayant la première ID de demande unique à la réception du message de rétroaction au pair du réseau, le message de rétroaction comprenant une indication sur si le service à la deuxième ID de service a été fourni avec succès ou non; et
envoyer un deuxième message de demande de service ayant une deuxième ID de demande unique demandant un service à la deuxième ID de service à un pair du réseau sélectionné sur base de l'indication.

16. Programme d'ordinateur ayant un code de programme pour réaliser le procédé selon la revendication 15 lorsque le code de programme est exécuté sur un ordinateur.

means for forwarding
first service request

110

means for forwarding
feedback message

120

100

means for forwarding
second service request

130

# FIG 1A

```
                ┌──────────────────────────────┐
                │         Application          │
                └──────────────────────────────┘
                        │                    ╲
                    Uses│                     ╲ 210
                        ▼
                ┌──────────────────────────────┐        Uses        ┌──────────────────────────────┐
                │   Forward feedback protocol  │ ─────────────────▶ │      Failure predictor       │
                └──────────────────────────────┘                    └──────────────────────────────┘
                        │             ╲                                      │               ╲
                 Extends│              ╲ 220                             Uses│                ╲ 230
                        ▼                                                    ▼
                ┌──────────────────────────────┐                    ┌──────────────────────────────┐
                │    Service location protocol │                    │       p-concept learner      │
                └──────────────────────────────┘                    └──────────────────────────────┘
                                      ╲                                                     ╲
                                       ╲ 250                                                ╲ 240
```

# FIG 1B

ServiceRequest
① →

245

260

Origin

Service

② Provider

270

② →

Feedback

FIG 2

(a) QUIET, one-on-one

(b) DEFECTOR, one-on-one

(c) DEFECTOR, many-on-one

legend

FIG.3A-C

(d) DROPPER, one-on-one

(e) WHITERLIAR, one-on-one

(f) BADMOUTHER, one-on-one

FIG 3D-F

(g) SMARTLIAR, one-on-one

(h) SMARTLIAR, many-on-one

(i) legend

FIG 3G-I

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **LAMPORT ; SHOSTAK ; PEASE.** The byzantine general problem, Advances in Ultra-Dependable Distributed Systems. IEEE Computer Society Press, 1995
- **DAVID M. KREPS ; ROBERT WILSON.** Reputation and imperfect information. *Journal of Economic Theory,* 1982, vol. 27, 253-279
- **MICHIHIRO KANDORI ; HITOSHI MATSUSHIMA.** Private observation, communication and collusion. *Econometrica,* May 1998, vol. 66 (3), 627-652
- **GEORGE J. MAILATH ; STEPHEN MORRIS.** Repeated games with almostpublic monitoring. *CARESS Working Papres almost-pub,* August 1999
- **ROBERT M. AXELROD.** The Evolution of Cooperation. *Basic Books,* 1984

- **Hu et al.** *Autonomic Peer-to-Peer Service discovery,* 2005, vol. E88-D
- Towards incentive-compatible reputation management. **RADU JURCA ; BOI FALTINGS.** Trust, Reputation and Security: Theories and Practice. Springer-Verlag, 2003, 138-147
- **KEARNS ; SCHAPIRE.** Efficient distribution-free learning of probabilistic concepts, Computational Learning Theory and Natural Learning Systems, Volume I: Constraints and Prospect. MIT Press, 1994, vol. 1
- **RONALD L. RIVEST.** Learning decision lists. *Machine Learning,* 1987, vol. 2 (3), 229-246
- **ROBERT MORRIS ; DAVID KARGER ; FRANS KAASHOEK ; HARI BALAKRISHNAN.** *Chord: A scalable Peer-To-Peer lookup service for internet applications,* 149-160